# EUROPEAN PATENT APPLICATION

(11) **EP 4 734 346 A1**
(43) Date of publication of application: **29.04.2026**
(21) Application number: 25211176.0
(22) Date of filing: 24.10.2025
(51) Int. Cl.: H02M 1/36, H02M 3/158

(54) **METHOD OF LIMITING STARTUP INRUSH CURRENT AND A SYSTEM FOR LIMITING STARTUP INRUSH CURRENT**

(30) Priority: 24.10.2024 US 202418925615
(71) Applicant: Nexperia B.V., 6534 AB Nijmegen (NL)
(72) Inventor: Vera, Alejandro, Dallas (US); Smith, Jacob, Dallas (US); Singh, Chandni, Dallas (US)
(74) Representative: Pjanovic, Ilija

(57) **Abstract**

A method limits an inrush current of a buck converter having an inductor element during a startup period in which the buck converter is first enabled. The inrush current flows through the inductor element by enabling a zero current detection algorithm for a first few operational cycles. A system is also configured to limit the inrush current of a buck converter having an inductor element during a startup period in which the buck converter is first enabled.

## Description

### BACKGROUND OF THE DISCLOSURE

### 1. Field of the Disclosure

The present disclosure relates, in general, to electronics and, more particularly, to a method of limiting startup inrush current and a system for limiting startup inrush current while starting to operate.

### 2. Description of Related Art

Document US9350240B2 has PWM control circuits and soft start circuitry. A source follower circuit provides an input to a pulse generator error amplifier during startup according to a lower one of an internal soft start circuit ramp signal and a voltage across an externally connected capacitor. A current source is connected to the source follower circuit to limit the charging current supplied to the externally connected capacitor.

US 20180006560 has a method of regulating the output voltage of a buck converter during a startup period in which the buck converter is first enabled. The method includes regulating the output voltage of the buck converter to a reference voltage under current-mode control during a first part of the startup period and regulating the output voltage of the buck converter to the reference voltage under voltage-mode control during a second, later part of the startup period. The reference voltage ramps up from an initial voltage at the beginning of the startup period to a target voltage at the end of the startup period. Buck converter embodiments are also described.

Accordingly, it is a goal of the present disclosure to provide an improved method of limiting inrush current without relying on the PCM loop to limit this inrush current regardless of load.

### SUMMARY OF THE DISCLOSURE

Buck converters often exhibit large in-rush current when started up. This can cause the output voltage to overshoot and damage the converter and other devices. Known soft-start techniques to try to minimize the in-rush current. Traditional soft-start techniques do not adequately address completely discharged output conditions and how slowly the inductor current will discharge during the off-time. This leads to large overshoots in the inductor current.

The present disclosure addresses this problem by introducing a state machine-based flow that safely pre-charges the output enough to allow the loop error amplifier to regulate without a large inrush of current. When a Peak-Current Mode (PCM) controlled buck converter starts up, the inductor current is typically limited by one of two factors: the peak controller or minimum on time. As most PCM converters operate at a fixed frequency, when the output voltage is discharged all the way, it takes a long time for the inductor to lose its energy. If not properly regulated, even if the loop reference is being soft started, the inductor current will tend to try to run away and produce large inrush currents. Prior solutions just accept this inrush current and will often rely purely on the PCM loop to try to limit this inrush current.

The present disclosure specifically looks at zero cross to limit the current in conjunction with a soft starting reference voltage (VREF) ramp. This novel solution addresses both the current and voltage soft-start conditions to prevent large overshoots of current or voltage. Other known solutions have more complex regulation loops (full voltage-mode) that are larger and more complicated, which leads to increased die size and cost.

The present disclosure forces a zero cross on the inductor on the first few pulses and disables any valley loop regulation to prevent overcharging of the output capacitor. In conjunction, the disclosure slowly brings up the other loops (peak and valley) to more smoothly ramp up the inductor current. By looking at the inductor current when the device is enabled, the inductor current is controlled and consistently goes to 0 A, regardless of load. That is one of the advantages of the present disclosure and how it prevents current runaway. Other methods are more complex and rely on changing the loop gain of the valley, running the converter open loop entirely, or forcing negative current valley to prevent overcharging. All of these require more complicated circuitry than the system and methods of the present disclosure.

The present disclosure pertains to a method of limiting an inrush current of a buck converter comprising an inductor element during a startup period in which the buck converter is first enabled, and the inrush current flows through the inductor element. The method includes the steps of:
(a.) setting a cycle counter on zero cycle count;
(b.) disabling an inrush current valley control algorithm;
(c.) enabling an inrush current peak control algorithm;
(d.) enabling an inrush current zero crossing algorithm;
(e.) setting the cycle counter on a first cycle count;
(f.) enabling a current flow through the inductor element;
(g.) detecting the inductor element current peak value by the peak control algorithm;
(h.) disabling the current flow through the inductor element;
(i.) forcing a zero crossing of the inrush current by discharging current from the inductor element;
(j.) setting the cycle counter to a second cycle count and repeating steps (f.) to
(i.) while setting the cycle count increased by one after step (i.) until the cycle count is more than two, which triggers entering the next step;
(k.) enabling the inrush current valley control algorithm;
(l.)enabling a current flow through the inductor element; and
(m.) entering the loop operation mode in which the current flow through the inductor element is enabled while a current valley is detected by the valley control algorithm and the current flow through the inductor element is disabled while a current peak is detected by the peak control algorithm.

Preferably, in step (i.), there is a time limit included in the case of not discharging the current completely from the inductor element, after which step (j.) is immediately realized regardless of whether there is current flow in the inductor element or not.

Preferably, in step (i.), the limit is set to 10 µs.

Preferably, in step (j.), the cycle count triggering the occurrence of the next step is four.

The disclosure also relates to a system for limiting an inrush current of a buck converter comprising an inductor element where, during a startup period in which the buck converter is first enabled, the inrush current flows through the inductor element. The system comprises a cycle counter, an inrush current valley control circuit, an inrush current peak control circuit, an inrush current zero crossing circuit, and a current flow through at least the inductor element enabling circuit.

According to an example of the disclosure, when a Peak-Current Mode (PCM) controlled buck converter starts up, the inductor current is typically limited by one of two factors: the peak controller or minimum on time. As most PCM converters operate at a fixed frequency, when the output voltage is discharged all the way, it takes a long time for the inductor to lose its energy. If not properly regulated, even if the loop reference is being soft started, the inductor current will tend to try to run away and produce large inrush currents.

### BRIEF DESCRIPTION OF THE DRAWINGS

The disclosure will now be discussed with reference to the drawings.
Fig. 1 shows a chart with the disabling and enabling control algorithms according to the inductor element's current state (peak or valley).
Fig. 2 shows a diagram of the Soft-Start Scheme.

### DETAILED DESCRIPTION OF THE DISCLOSURE

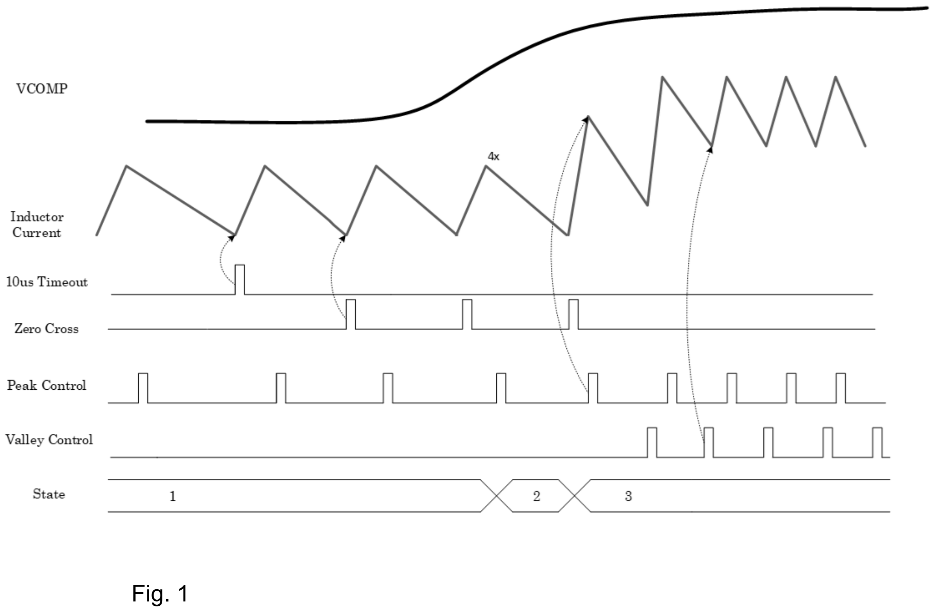

In a first example according to the present disclosure, the buck converter inrush current is minimized by using a state-machine that sequences safe startup steps. In essence, a valley control algorithm is enabled for controlling the valley of the inductor current during startup. The first cycle involves forcing a zero cross (inductor current must decrease all the way down to zero). The second through fourth cycles will again force zero cross events or Low Side FET timeouts (10us max), whichever comes first. The fifth cycle will re-enable the valley loop and allow both peak and valley controllers to act on the inductor current and resume normal operation. This prevents runaway current on the inductor during the first few cycles, as shown in Fig. 1.

The concept is to force a zero-cross event when powering up the converter and then slowly allow the converter loops to take over. This prevents the inductor current from spiking up in an uncontrolled fashion and limits the output voltage overshoot. After four pulses of forcing zero cross events, the error amplifier will have been given enough time for normal peak current mode operation to resume.

In another example of the present disclosure, a method limits an inrush current of a buck converter which typically comprises an inductor element. During a startup (setting the power to on or connecting the load to the converter) period in which the buck converter is first enabled (or connected to the load-receiver), the inrush current flows through the inductor element (which is a typical element of the converter).

The method includes setting a cycle counter on zero cycle count. Counting cycles serves the purpose of better understanding the disclosure. It can be replaced by time counts or event counts like peaks (inductor high current values), zero crossing (inductor current zero values), or valleys (inductor low current values). High or low current values are set or established for each operation mode and load value, or they are just variables set or proposed by the converter operator or algorithm.

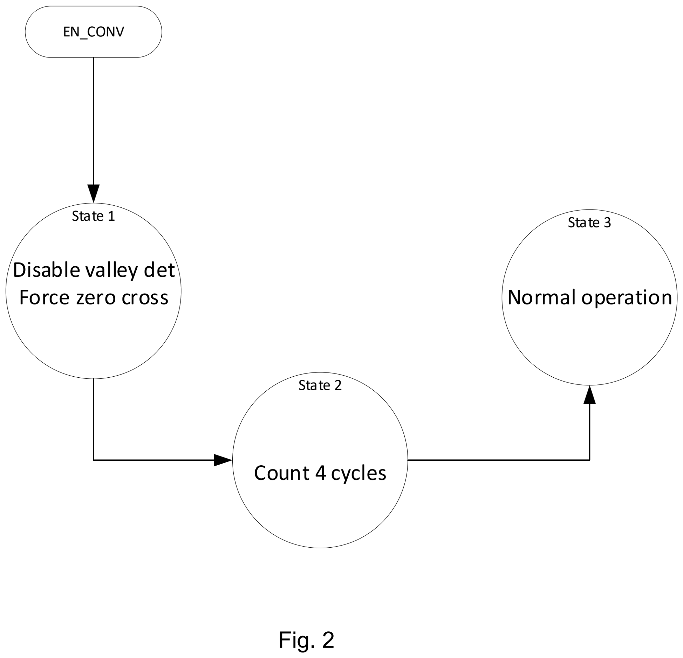

The next step is to disable the inrush current valley control algorithm. See Fig. 2, state 1.

The steps that follow can be performed without valley control for better discharge of the inductor.

The next step is to enable the inrush current peak control algorithm. Peak control is similar to the valley control algorithm but is set to detect the high current values while on-state (the inductor connected to the current source or load).

After that, the inrush current zero crossing algorithm is enabled. Zero crossing events are to be detected. In this example, the first cycles are determined by the high current events detection and zero crossing events detection.

The next step is to set a cycle counter on a first cycle count, and then enable a current flow through at least the inductor element.

After that, the inductor element current peak value is detected by the peak control algorithm which triggers disabling a current flow through at least the inductor element.

The next step is a consequence of the previous step, forcing a zero crossing of the inrush current by discharging current from the inductor element.

After that, a loop operation mode starts by setting a cycle counter to a second cycle count, and the previous steps are repeated while the cycle count setting is increased by one after another loop is finished and until the cycle count is more than four, or in some examples, more than four. See Fig. 2, state 2.

This triggers the loop break and normal operation mode (controlled by the peak and valley detection algorithms). See Fig. 2, state 3.

The normal operation mode is when the inrush current valley control algorithm is enabled, and a current flows through at least the inductor element. In this mode, there is a loop in which the current flow through at least the inductor element is enabled while a current valley is detected by the valley control algorithm, and the current flow through at least the inductor element is disabled while a current peak is detected by the peak control algorithm.

In another example according to the present disclosure, there is a time limit included in the case of not discharging the current completely from the inductor element after which step (j.) is immediately realized, regardless of whether there is current flow in the inductor element or not.

In another example of the present disclosure, the time limit is set to 10 µs.

The disclosure also relates to a system. In an example of the present disclosure, a system limits an inrush current of a buck converter comprising an inductor element, where the inrush current flows through the inductor element during a startup period in which the buck converter is first enabled. The system includes a cycle counter, an inrush current valley control circuit, an inrush current peak control circuit, an inrush current zero crossing circuit, and a current flow through at least the inductor element enabling circuit.

## Claims

1. A method of limiting an inrush current of a buck converter comprising an inductor element, wherein during a startup period in which the buck converter is first enabled, the inrush current flows through the inductor element, the method comprising the steps of:
(a.) setting a cycle counter to a zero cycle count;
(b.) disabling an inrush current valley control algorithm;
(c.) enabling an inrush current peak control algorithm;
(d.) enabling an inrush current zero crossing algorithm;
(e.) setting a cycle counter to a first cycle count;
(f.) enabling a current flow through the inductor element;
(g.) detecting an inductor element current peak value by the inrush current peak control algorithm;
(h.) disabling a current flow through the inductor element;
(i.) forcing a zero crossing of the inrush current by discharging current from the inductor element;
(j.) setting a cycle counter to a second cycle count and repeating steps (f.) to (i.) while setting the cycle count to add a subsequent cycle count after each step (i.) until the cycle count is more than two;
(k.) enabling the inrush current valley control algorithm after the cycle count in step (j.) is more than two;
(l.) enabling a current flow through the inductor element; and
(m.) entering a loop operation mode in which the current flow through the inductor element is enabled while a current valley is detected by the inrush current valley control algorithm and the current flow through the inductor element is disabled while a current peak is detected by the inrush current peak control algorithm.

2. The method according to claim 1, wherein the method proceeds to step (j.) after a time limit in step (i.) is exceeded and the inductor element is not completely discharged regardless of whether there is a current flow in the inductor element or not.

3. The method according to claim 2, wherein the time limit in step (i.) is 10 µs.

4. The method according to claim 1, wherein step (k.) is performed after the cycle count in step (j.) is four.

5. The method according to claim 2, wherein step (k.) is performed after the cycle count in step (j.) is four.

6. The method according to claim 3, wherein step (k.) is performed after the cycle count in step (j.) is four.

7. A system for limiting an inrush current of a buck converter comprising an inductor element, wherein during a startup period in which the buck converter is first enabled, the inrush current flows through the inductor element, the system comprising:
a cycle counter;
an inrush current valley control circuit comprising an inrush current valley control algorithm;
an inrush current peak control circuit comprising an inrush current peak control algorithm;
an inrush current zero crossing circuit comprising an inrush current zero crossing algorithm;
a current flow through at least a circuit comprising the inductor element,
wherein the system is configured to perform the steps of:
(a.) setting the cycle counter to a zero cycle count;
(b.) disabling the inrush current valley control algorithm;
(c.) enabling the inrush current peak control algorithm;
(d.) enabling the inrush current zero crossing algorithm;
(e.) setting the cycle counter to a first cycle count;
(f.) enabling a current flow through the inductor element;
(g.) detecting an inductor element current peak value by the current inrush peak control algorithm;
(h.) disabling a current flow through the inductor element;
(i.) forcing a zero crossing of the inrush current by discharging current from the inductor element;
(j.) setting the cycle counter to a second cycle count and repeating steps (f.) to (i.) while setting the cycle count to add a subsequent cycle count after each step (i.) until the cycle count is more than two;
(k.) enabling the inrush current valley control algorithm after the cycle count in step (j.) is more than two;
(l.) enabling a current flow through the inductor element; and
(m.) entering a loop operation mode in which the current flow through the inductor element is enabled while a current valley is detected by the inrush current valley control algorithm and the current flow through the inductor element is disabled while a current peak is detected by the inrush current peak control algorithm.

8. The system according to claim 7, wherein the system proceeds to perform step (j.) after a time limit in step (i.) is exceeded and the inductor element is not completely discharged regardless of whether there is a current flow in the inductor element or not.

9. The system according to claim 8, wherein the time limit in step (i.) is 10 µs.

10. The system according to claim 7, wherein step (k.) is performed after the cycle count in step (j.) is four.

11. The system according to claim 8, wherein step (k.) is performed after the cycle count in step (j.) is four.

12. The system according to claim 9, wherein step (k.) is performed after the cycle count in step (j.) is four.
